(19) Europäisches Patentamt
European Patent Office
Office européen des brevets

(11) **EP 3 457 721 A1**

(12) **EUROPEAN PATENT APPLICATION**
published in accordance with Art. 153(4) EPC

(43) Date of publication:
**20.03.2019 Bulletin 2019/12**

(51) Int Cl.:
***H04W 4/00*** *(2018.01)*

(21) Application number: **17795502.8**

(22) Date of filing: **08.05.2017**

(86) International application number:
**PCT/CN2017/083439**

(87) International publication number:
**WO 2017/193884 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.05.2016 CN 201610317343**

(71) Applicant: **NTT DOCOMO, INC.**
**Tokyo (JP)**

(72) Inventors:
• **NA, Chongning**
**Beijing 100190 (CN)**
• **JIANG, Huiling**
**Beijing 100190 (CN)**
• **KAKISHIMA, Yuichi**
**Chiyoda-ku**
**Tokyo (JP)**
• **NAGATA, Satoshi**
**Chiyoda-ku**
**Tokyo (JP)**

(74) Representative: **Hoffmann Eitle**
**Patent- und Rechtsanwälte PartmbB**
**Arabellastraße 30**
**81925 München (DE)**

(54) **REFERENCE SIGNAL SENDING METHOD, DETECTION METHOD, BASE STATION, AND MOBILE STATION**

(57)     Provided in embodiments of the present invention are a CSI-RS sending method, CSI detection method, base station, and mobile station. The channel state information-reference signal (CSI-RS) sending method according to the embodiments of the present invention is performed by a base station, and comprises: aggregating multiple initial CSI-RS resource configurations to obtain an aggregated CSI-RS resource configuration; employing a first partial resource configuration of the aggregated CSI-RS resource configuration to transmit, with a first density, a CSI-RS of a first antenna port of an antenna array; and employing a second partial resource configuration of the aggregated CSI-RS resource configuration to transmit, with a second density, a CSI-RS of a second antenna port of the antenna array.

100

aggregating a plurality of CSI-RS initial resource configurations to obtain a CSI-RS aggregation resource configuration — S101

transmitting CSI-RSs of a first antenna port at a first density using a first partial resource configuration — S102

transmitting CSI-RSs of a second antenna port at a second density using a second partial resource configuration — S103

F I G. 1

EP 3 457 721 A1

**Description**

TECHNICAL FIELD

The present invention relates to the field of wireless communication, and more particularly, to a method, a base station and a mobile station for transmitting and detecting Channel State Information Reference Signals (CSI-RSs) which can be used in a wireless communication system.

BACKGROUND

In a subsequent system of LTE system (e.g. sometimes referred to as LTE-Advanced or LTE-Advanced Pro), it becomes more and more important that spatial characteristics of channels are measured in a user terminal, and the measurement result is fed back to a wireless base station in the form of channel state information (CSI). In a subsequent system of LTE (e.g. Release 10), it is proposed to use Channel State Information Reference Signals (CSI-RSs) as reference signals for measuring Channel State Information (CSI). For example, a base station transmits a CSI-RS for a mobile station to the mobile station, so that the mobile station performs a CSI measurement according to the CSI-RS and feedbacks a measurement result.

On the other hand, Full Dimensional MIMO (FD-MIMO) and Massive Multiple Input Multiple Output (Massive MIMO) antennas are wireless transmission technologies proposed in LTE (Long Term Evolution) Release 13 studied by 3GPP (3rd Generation Partnership Project). Compared with a conventional MIMO system, in FD-MIMO and massive MIMO system, the base station can use more antennas for data transmission to improve system throughput when the data of the mobile station increases. However, as the number of antennas increases, the control signaling overhead required for CSI-RS also increases accordingly. Moreover, considering that a mobile station using the conventional MIMO system and a mobile station using FD-MIMO and massive MIMO system may both exist in a cell, if FD-MIMO and massive MIMO system cannot be compatible with the conventional MIMO system, the base station needs to separately set a MIMO antenna array suitable for the conventional MIMO system and a FD-MIMO and massive MIMO antenna array. This leads to a further increase in the control signaling overhead.

SUMMARY OF THE INVENTION

According to an aspect of the present invention, a method for transmitting Channel State Information Reference Signals (CSI-RSs) performed by a base station is provided, wherein the base station having an antenna array. The method comprises: aggregating a plurality of CSI-RS initial resource configurations to obtain a CSI-RS aggregation resource configuration; transmitting CSI-RSs of a first antenna port in the antenna array at a first density, using a first part of resource configuration of the CSI-RS aggregation resource configuration; and transmitting CSI-RSs of a second antenna port in the antenna array at a second density, using a second part of resource configuration of the CSI-RS aggregation resource configuration.

According to another aspect of the present invention, a method for detecting Channel State Information Reference Signals (CSI-RSs) performed by a mobile station is provided. The method comprises: receiving aggregate configuration information about a CSI-RS aggregation resource configuration from a base station, wherein the CSI-RS aggregation resource configuration is obtained by aggregating a plurality of CSI-RS initial resource configurations; determining antenna ports in an antenna array of the base station needing to be detected according to the received aggregation configuration information; detecting CSI-RSs corresponding to the determined antenna ports.

According to another aspect of the present invention, a base station is provided. The base station comprises: a resource management unit configured to aggregate a plurality of CSI-RS initial resource configurations to obtain a CSI-RS aggregation resource configuration; a transmitting unit configured to transmit CSI-RSs of a first antenna port in the antenna array at a first density using a first part of resource configuration of the CSI-RS aggregation resource configuration, and transmit CSI-RSs of a second antenna port in the antenna array at a second density using a second part of resource configuration of the CSI-RS aggregation resource configuration.

According to another aspect of the present invention, a mobile station is provided. The mobile station comprises: a receiving unit configured to receive aggregate configuration information about a CSI-RS aggregation resource configuration from a base station, wherein the CSI-RS aggregation resource configuration is obtained by aggregating a plurality of CSI-RS initial resource configurations; a port determining unit configured to determine antenna ports in an antenna array of the base station needing to be detected according to the received aggregation configuration information; a detecting unit configured to detect CSI-RSs corresponding to the determined antenna ports.

According to the CSI-RS transmission method, the CSI-RS detection method, the base station and the mobile station of the above aspects of the present invention, the CSI-RS initial resource configurations are aggregated, and the CSI-RSs are transmitted at different densities in the aggregated resource configuration, which enables the wireless communication system accomplish a good compatibility between FD-MIMO and massive MIMO system and the conventional MIMO system while the downlink control signaling overhead occupied by CSI-RSs can be reduced by decreasing the transmission densities.

BRIEF DESCRIPTION OF THE DRAWINGS

The above and other objects, features and advantages of the present invention will become clearer by describing embodiments of the present invention in detail with reference to the accompanying drawings.

FIG. 1 is a flow chart showing a method for transmitting Channel State Information Reference Signals (CSI-RSs) performed by a base station.

FIG. 2 is a schematic diagram showing that aggregated CSI-RS initial resource configurations are determined according to a first type of mobile stations and a second type of mobile stations.

FIG. 3 is a schematic diagram showing a first part of resource and a second part of resource in the CSI-RS aggregation resource configuration in the example shown in FIG. 2.

FIG. 4 is schematic diagram showing that the aggregated CSI-RS initial resource configurations are determined according to the first type of mobile stations and the second type of mobile stations according to another example of the present invention.

FIG. 5 is a schematic diagram showing the first part of resource and the second part of resource in the CSI-RS aggregation resource configuration in the example shown in FIG. 4.

FIG. 6 is a schematic diagram showing orthogonal covering code applied on two CSI-RS initial resource configurations included in the second part of resource configuration described in FIG. 3 according to an example of the present invention.

FIG. 7 is a flow chart showing a Channel State Information (CSI) detection method.

FIG. 8 shows a block diagram of the base station according to an embodiment of the present invention.

FIG. 9 shows a block diagram of the mobile station according to an embodiment of the present invention.

DESCRIPTION OF THE EMBODIMENTS

Hereinafter, a method, a base station and a mobile station for transmitting and detecting Channel State Information Reference Signals (CSI-RSs) will be described with reference to the accompanying drawings. In the drawings, like reference numerals refer to like elements throughout. It should be understood that the embodiments described herein are merely illustrative and should not be construed as limiting the scope of the present invention. Moreover, the UE described herein may include various types of user terminals, such as a mobile terminal (or referred to a mobile station) or a fixed terminal. However, for convenience, the UE and the mobile station sometimes may be used interchangeably hereinafter.

The base station may transmit configuration information about antenna ports, beams, time and frequency resources etc used when CSI-RSs are transmitted, to the mobile station statically or semi-statically through RRC signaling. Then, according to an indication of the configuration information, the base station periodically transmits a CSI-RS to the mobile station, and the mobile station receives the CSI-RS at a time interval indicated by the configuration information, performs a measurement according to the received CSI-RS, and performs CSI feedback to the base station according to the measurement.

Resource allocation methods for CSI-RSs supporting different antenna ports have been separately proposed. For example, in Release 10, a resource allocation method for CSI-RSs for an antenna array having 1, 2, 4, or 8 ports is proposed. For another example, in Release 13, an antenna array having 8, 12, or 16 ports is proposed. Further, in Release 14, a base station supporting more antenna ports (e.g. a base station supporting 20, 24, 28 or 32 ports) is proposed. It can be understood that with using more antenna ports (e.g. 32 ports), if CSI-RSs are transmitted with a same transmission density as that of the CSI-RSs for fewer antenna ports (e.g. 8 ports), it may lead to a significant increase in the downlink signaling overhead.

In order to reduce the signaling overhead, it has been proposed to use a smaller density to transmit CSI-RS when using large number of antenna ports. However, this results in the incompatibility between antenna ports using different transmission densities, which requires that antenna arrays for different transmission densities are respectively set in the base station. For example, an 8-port antenna array, a 16-port antenna array and a 32-port antenna array are separately set. This increases the complexity of setting in the base station while increases the downlink signaling overhead. Thus, the existing CSI-RS transmission method is not applicable to a case where a mobile station using the conventional MIMO system and a mobile station using FD-MIMO and massive MIMO system exist simultaneously in a cell.

Embodiments of the present invention improve resource allocation and transmission methods of CSI-RS. Hereinafter, embodiments of the present invention will be described with reference to the accompanying drawings.

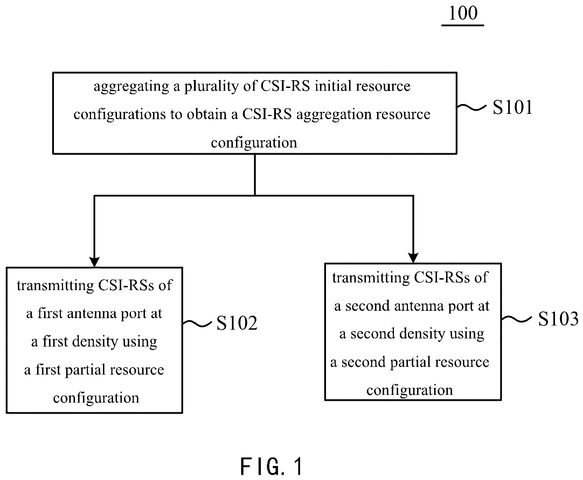

Hereinafter, the method for transmitting Channel State Information Reference Signals (CSI-RSs) performed by the base station according to an embodiment of the present invention will be described with reference to FIG. 1. In the embodiment in accordance with the present invention, the base station may have an antenna array comprising a plurality of antenna ports. FIG. 1 shows a flow chart of the CSI-RS transmission method 100. As shown in FIG. 1, in step S101, a plurality of CSI-RS initial resource configurations are aggregated to obtain a CSI-RS aggregation resource configuration.

According to an example of the present invention, the CSI-RS initial resource configurations and the mode for aggregating the CSI-RS initial resource configurations may be determined according to the type of mobile stations actually connected to the base station. Specifically, there may be a first type of mobile stations and a second type of mobile stations connected to the base station, where the base station transmits data to the first type of mobile stations through a first number of antenna ports in the antenna array and transmits data to the second type of mobile stations through a second number of antenna ports in the antenna array, the first number being less than the second number. The aggregated CSI-RS initial resource configurations may be determined according to the first type of mobile stations and the second type of mobile stations. For example, the pattern of the aggregated CSI-RS initial resource configurations may be determined according to the first type of mobile stations, and the number of the aggregated CSI-RS initial resource configurations is determined according to the pattern of the aggregated CSI-RS initial resource configurations and the second type of mobile stations. The pattern of the CSI-RS initial resource configurations may include the number of ports and the location of the occupied resources for transmitting CSI-RSs.

For example, when the first type of mobile stations is a mobile station that receives 4-port data transmission and the second type of mobile stations is a mobile station that receives 12-port data transmission, it may be determined that the pattern of the aggregated CSI-RS initial resource configurations is a pattern of CSI-RS resource configuration for mobile stations receiving 4-port data transmission. In addition, it may be determined that three CSI-RS initial resource need to be configured to obtain the CSI-RS aggregation resource configuration.

For another example, when the first type of mobile stations is a mobile station that receives 8-port data transmission and the second type of mobile stations is a mobile station that receives 16-port data transmission, it may be determined that the pattern of the aggregated CSI-RS initial resource configurations is a pattern of CSI-RS resource configuration for mobile stations receiving 8-port data transmission. In addition, it may be determined that two CSI-RS initial resource need to be configured to obtain the CSI-RS aggregation resource configuration.

According to another example of the present invention, the CSI-RS initial resource configurations and the mode for aggregating the CSI-RS initial resource configurations may be determined according to the type of mobile stations possibly connected to the base station. Specifically, there may be a first type of mobile stations and a second type of mobile stations possibly connected to the base station, where the base station transmits data to the first type of mobile stations through a first number of antenna ports in the antenna array and transmits data to the second type of mobile stations through a second number of antenna ports in the antenna array, the first number being less than the second number, as described above. The aggregated CSI-RS initial resource configurations may be determined according to the first type of mobile stations and the second type of mobile stations.

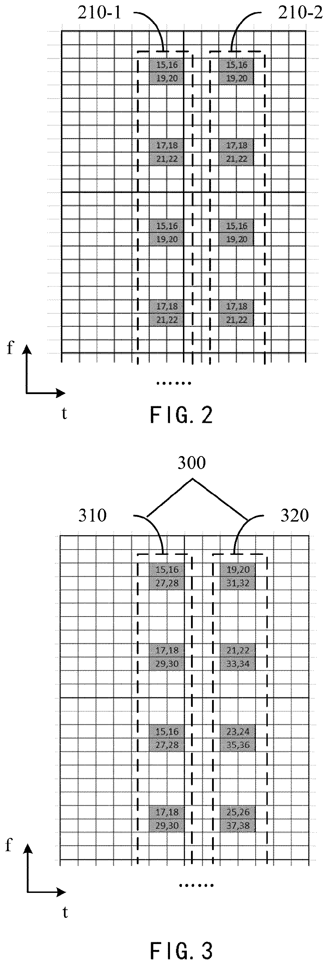

FIG. 2 is a schematic diagram showing that the aggregated CSI-RS initial resource configurations are determined according to the first type of mobile stations and the second type of mobile stations according to an example of the present invention. In the example shown in FIG. 2, the first type of mobile stations receiving 8-port data transmission and the second type of mobile stations capable of receiving 24-port data transmission are connected to the base station. The pattern of CSI-RS resource configuration of the mobile stations capable of receiving 8-port data transmission in the existing standard can be obtained as the pattern of CSI-RS initial resource configurations. As shown in FIG. 2, for example, according to Release 10, for an 8-port antenna array, CSI-RSs are transmitted through antenna ports 15-22. Each time CSI-RSs are transmitted, specific resource blocks of one subframe and a bandwidth (for example, as shown in the gray area in FIG. 2) are used to transmit. Specifically, each time CSI-RSs are transmitted, CSI-RSs are transmitted using frequency resource blocks distributed over the entire bandwidth of the base station. As shown in FIG. 2, the entire bandwidth may be divided into a plurality of resource block groups, each of which includes 12 frequency resource blocks, and the 8-port CSI-RSs are transmitted in a same manner in respective resource block group. Further, CSI-RSs may be periodically transmitted with an interval of one or more subframes (e.g., 5 subframes).

Moreover, in the example shown in FIG. 2, 2 CSI-RS initial resource configurations may be aggregated to obtain the CSI-RS aggregation resource configuration. For example, CSI-RS resource configurations 210-1 and 210-2 are aggregated to obtain the CSI-RS aggregation resource configuration. According to an embodiment of the present invention, in a first part resource configuration and a second part resource configuration of the CSI-RS aggregation resource configuration, CSI-RSs may be transmitted at different densities, which will be described in detail below in conjunction with step S102 and step S103.

Moreover, according to another example of the present invention, the first type of mobile stations may include one or more sub-types of mobile stations, where the number of antenna ports used by the base station to transmit data to respective sub-types of mobile stations is different. In this case, the base station may determine the type of the aggregated CSI-RS initial resource configurations based on one or more sub-types of mobile stations. For example, the pattern of the aggregated CSI-RS initial resource configurations is a pattern of CSI-RS resource configurations for a specific sub-type of mobile stations of one or more sub-types of mobile stations.

For example, there may be mobile stations capable of receiving 4-port, 8-port and 24-port data transmissions connected to the base station. Mobile stations capable of receiving 4-port and 8-port data transmissions can be used as the first type of mobile stations, and mobile stations capable of receiving 24-port data transmission can be used as the second type of mobile stations. The pattern of the aggregated CSI-RS initial resource configurations may be determined according to the number of mobile stations capable of receiving 4-port and 8-port data transmissions connected to the base station. For example, when the number of mobile stations capable of receiving 8-port data transmission connected to the base station is larger than the number of mobile stations capable of receiving 4-port data transmission connected to the base station, the pattern of the CSI-RS resource configuration for mobile stations capable of receiving 8-port data transmission is used as the pattern of the CSI-RS initial resource configurations. On the contrary, the pattern of the CSI-RS resource configuration for mobile stations capable of receiving 4-port data transmission is used as the pattern of the CSI-RS initial resource configurations.

Returning to FIG. 1, in step S102, CSI-RSs of a first antenna port in the antenna array are transmitted at a first density using a first part of resource configuration of the CSI-RS aggregation resource configuration. Moreover, in step S103, CSI-RSs of a second antenna port in the antenna array are transmitted at a second density using a second part of resource configuration of the CSI-RS aggregation resource configuration. For example, the first density can be an integer time(s) of the second density.

As described above, there may be the first type of mobile stations and the second type of mobile stations connected to the base station, where the base station transmits data to the first type of mobile stations through the first number of antenna ports in the antenna array and transmits data to the second type of mobile stations through the second number of antenna ports in the antenna array, the first number being less than the second number. According to an example of the present invention, the first part of resource configuration may be determined according to the first type of mobile stations and the second type of mobile stations, where CSI-RSs of the first antenna port is used for CSI measurement of the first type of mobile stations, and CSI-RSs of the first antenna port and CSI-RSs of the second antenna port are used for CSI measurement of the second type of mobile stations. Thus, in the first part of resource configuration, CSI-RSs can be transmitted with a transmission density suitable for the first type of mobile stations. On the other hand, in the second part of resource configuration, since it is not necessary to consider the first type of mobile stations, CSI-RSs can be transmitted at the second density different from the first density. For example, CSI-RSs can be transmitted at the second density that is lower than the first density. Moreover, according to another example of the present invention, the first part of resource configuration can include at least one aggregated CSI-RS initial resource configuration.

FIG. 3 is a schematic diagram showing the first part of resource and the second part of resource in the CSI-RS aggregation resource configuration in the example shown in FIG. 2. Specifically, in FIG. 3, the CSI-RS aggregation resource configuration 300 is obtained by performing aggregation on the CSI-RS initial resource configurations 210-1 to 210-2 shown in FIG. 2. As described above, in the present example, there are the first type of mobile stations capable of receiving 8-port data transmission and the second type of mobile stations capable of receiving 24-port data transmission connected to the base station. The first part of resource configuration may be determined according to mobile stations capable of receiving 8-port data transmission and the second type of mobile stations capable of receiving 24-port data transmission, in order to determine a size of the first part of resource configuration, and CSI-RSs are transmitted with the transmission density applicable for mobile stations capable of receiving 8-port data transmission in the first part of resource configuration.

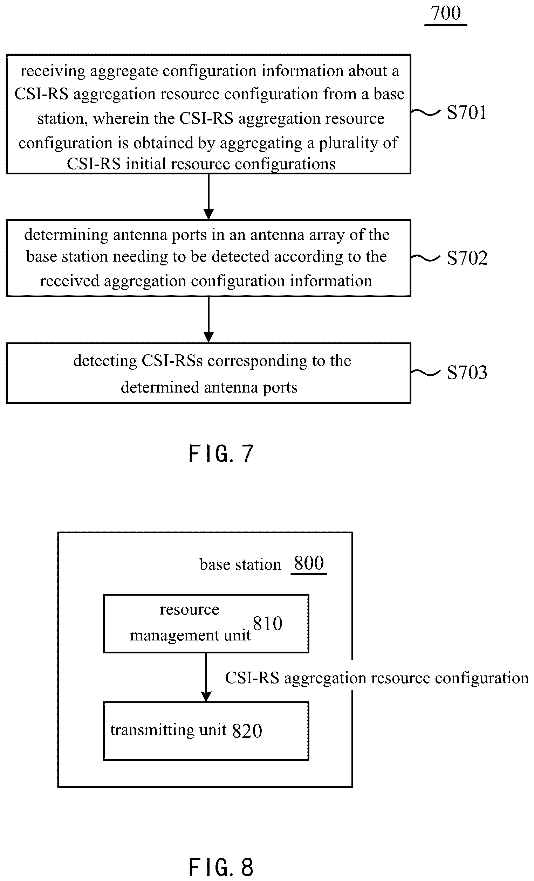

As described above, in FIG. 2, the CSI-RS resource configurations for mobile stations capable of receiving 8-port data transmission are used as CSI-RS initial resource configurations. Thus, as shown in FIG. 3, the CSI-RS initial resource configuration 210-1 can be used as the first part of resource configuration 310, and the CSI-RS initial resource configuration 210-2 can be used as the second part of resource configuration 320. As shown in FIG. 3, 8 antenna ports whose reference signals are transmitted in the first part of resource configuration 310 are ports 15-18 and 27-30, and 16 antenna ports whose reference signals are transmitted in the second part of resource configuration 320 are ports 19-26 and 31-38. That is, the antenna ports for transmitting reference signals in the first part of resource configuration are different from the antenna ports for transmitting reference signals in the second part of resource configuration.

Moreover, as shown in FIG. 3, the transmission density of reference signals for each antenna port in the first part of resource configuration 310 is twice times as much as the transmission density of reference signals for each antenna port in the second part of resource configuration 320. Thus, the transmission of CSI-RSs for mobile stations capable of receiving 8-port data transmission is achieved by the first part of resource configuration 310, and the transmission of CSI-RSs for mobile stations capable of receiving 24-port data transmission is achieved jointly by the first part of resource configuration 310 and the second part of resource configuration 320.

Moreover, in the example shown in FIG. 2, for an 8-port antenna array, CSI-RSs are transmitted through antenna ports 15-22. However, the number of the antenna ports in 24-port antenna array is different from the number of the antenna ports in 8-port antenna array. Thus, as shown in FIG. 3, in the first part of resource configuration, the number of the antenna ports for the first type of mobile stations capable of receiving 8-port data transmission is different from the number of the antenna ports for the first type of mobile stations capable of receiving 8-port data transmission as shown in FIG. 2.

According to an example of the present invention, an initial antenna port P' corresponding to the CSI-RS initial resource configurations may be determined according to resource configuration information about the CSI-RS initial resource configurations, and the antenna port P in the antenna array to be detected is obtained according to the determined initial antenna port, the number K of the CSI-RS initial resource configurations aggregated in the CSI aggregation resource configuration, the number L of the CSI-RS initial resource configurations in the first part of resource configuration of the CSI aggregation resource configuration, and a relationship parameter Q between the first density and the second density.

For example, in the first part of resource configuration, the antenna port P can be determined by the following equation (1) and equation (2).

Specifically, when $(P'-15) < M*C$, the antenna port P can be determined by the following equation (1).

$$P = (k-1)*M*C+P'      \cdots\cdots    (1)$$

When $(P'-15)>=M*C$, the antenna port P can be determined by the following equation (2).

$$P = (k-1)*M*C+P'      \cdots\cdots    (2)$$

Where k is the number of the aggregated CSI-RS initial resource configurations, M is the number of rows (or the number of columns) included in the antenna array of the base station, and C is the number of rows (or the number of columns) included in the antenna array for the CSI-RS initial resource configurations.

In addition, the antenna port in the antenna array to be detected may also be determined according to the resource block index n_RB indicated in the aggregated CSI-RS initial resource configurations.

For example, in the second part of resource configuration, the antenna port P can be determined by the following equation (3) and equation (4).

Specifically, when $(P'-15) < M*C$, the antenna port P can be determined by the following equation (3).

$$P = (k-1)*M*C+l*M*C+P'      \cdots\cdots    (3)$$

When $(P'-15)>=M*C$, the antenna port P can be determined by the following equation (4).

$$P = (k-1)*M*C+(K-L)*Q*M*C+l*M*C+P'      \cdots\cdots    (4)$$

Where, $l = mod (n\_RB, Q)$, and n_RB refers to the number of resource blocks in the entire bandwidth.

The constant "15" in the equations (1) - (4) is a starting number of the antenna ports for transmitting CSI-RSs. For example, as described above, in Release 10, CSI-RSs are transmitted through the antenna ports 15-22.

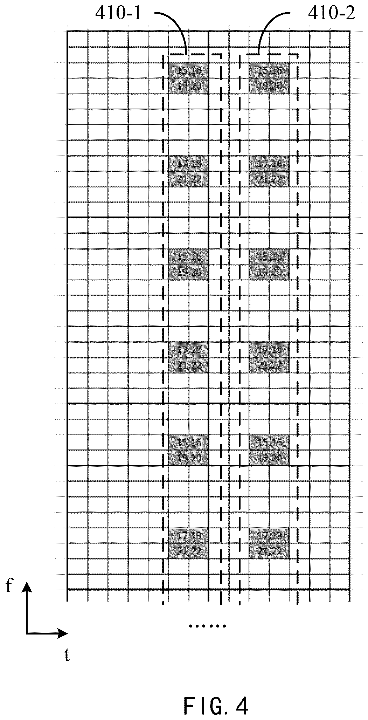

FIG. 4 is schematic diagram showing that the aggregated CSI-RS initial resource configurations are determined according to the first type of mobile stations and the second type of mobile stations according to another example of the present invention. In the example shown in FIG. 4, the first type of mobile stations receiving 8-port data transmission and the second type of mobile stations capable of receiving 32-port data transmission are connected to the base station. Similar to FIG. 2, the pattern of CSI-RS resource configuration of the mobile stations capable of receiving 8-port data transmission in the existing standard can be obtained as the pattern of CSI-RS initial resource configurations. Moreover, in the example shown in FIG. 4, in order to implement transmission of CSI-RSs to the second type of mobile stations capable of receiving 32-port data transmission, 2 CSI-RS initial resource configurations may be aggregated to obtain the CSI-RS aggregation resource configuration. For example, CSI-RS resource configurations 410-1 to 410-2 are aggregated to obtain the CSI-RS aggregation resource configuration. In order to illustrate the aggregation for 32 ports, aggregating CSI-RS resource configurations 410-1 to 410-2 and aggregating CSI-RS resource configurations 210-1 to 210-2, more parts on the frequency for the CSI-RS resource configuration is shown in FIG. 4. According to an embodiment of the present invention, in the first part of resource configuration and the second part of resource configuration of the CSI-RS aggregation resource configuration, CSI-RSs may be transmitted at different densities.

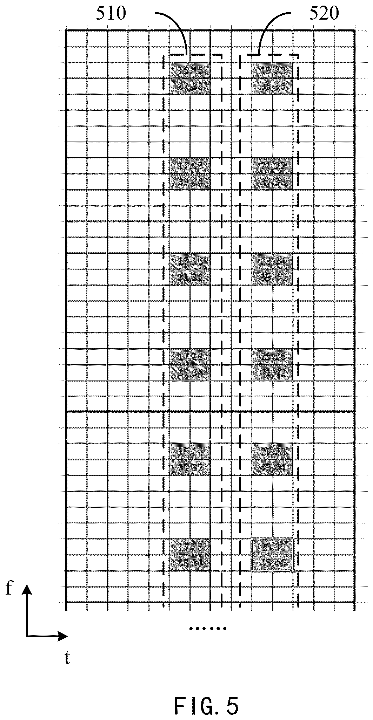

FIG. 5 is a schematic diagram showing the first part of resource and the second part of resource in the CSI-RS aggregation resource configuration in the example shown in FIG. 4. Specifically, in FIG. 4, the CSI-RS aggregation resource configuration 500 is obtained by performing aggregation on the CSI-RS initial resource configurations 410-1 to 410-2 shown in FIG. 4. The first part of resource configuration may be determined according to mobile stations capable of receiving 8-port data transmission and the second type of mobile stations capable of receiving 32-port data transmission, in order to determine a size of the first part of resource configuration, and CSI-RSs are transmitted with the transmission density applicable for mobile stations capable of receiving 8-port data transmission in the first part of resource configuration.

As described above, in FIG. 4, the CSI-RS resource configurations for mobile stations capable of receiving 8-port data transmission are used as the CSI-RS initial resource configurations. Thus, as shown in FIG. 5, the CSI-RS initial resource configuration 410-1 can be used as the first part of resource configuration 510 for transmitting CSI-RSs for the first type of mobile stations capable of receiving 8-port data transmission, and the additional CSI-RS initial resource configuration 410-2 can be used as the second part of resource configuration 520 for transmitting CSI-RSs for the first type of mobile stations capable of receiving 24-port data transmission. As shown in FIG. 5, CSI-RSs for each of the 8 antenna ports of the first type of mobile stations are transmitted in the first part of resource configuration 510, and CSI-RSs for 24 antenna ports different from the antenna ports in the first part of resource configuration 510 for the second type of mobile stations are transmitted in the second part of resource configuration 520. As shown in FIG. 5, the transmission density of reference signals for each antenna port in the first part of resource configuration 510 is three times of the transmission density of reference signals for each antenna port in the second part of resource configuration 520. Thus, the transmission of CSI-RSs for mobile stations capable of receiving 8-port data transmission is performed by using the first part of resource configuration 510, and the transmission of CSI-RSs for mobile stations capable of receiving 32-port data transmission is performed by using the first part of resource configuration 510 and the second part of resource configuration 520.

Moreover, according to another example of the present invention, orthogonal covering code may be applied on CSI-RSs of the antenna ports transmitted in the second part of resource configuration in time and frequency to implement code division multiplexing, thereby improving the power gain when channels are estimated. For example, orthogonal covering code may be applied on a plurality of resource block groups included in the second part of resource configuration.

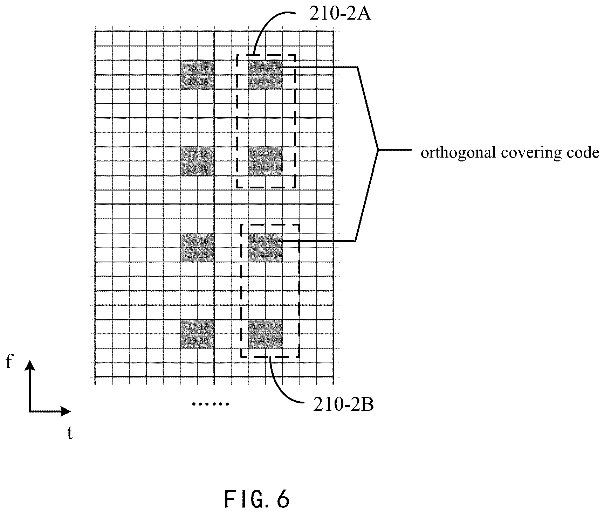

FIG. 6 is a schematic diagram showing orthogonal covering code applied on two resource block groups included in the second part of resource configuration 320 described in FIG. 3 according to an example of the present invention. As shown in FIG. 6, orthogonal covering code may be applied on CSI-RSs in the resource block groups 210-2A and 210-2B with respect to the antenna ports 19, 20, 23 and 24, to transmit a first part of codeword for CSI-RSs with respect to the antenna ports 19, 20, 23 and 24 in the CSI-RS initial resource configuration 210-2A and transmit a second part of codeword for CSI-RSs with respect to the antenna ports 19, 20, 23 and 24 in the CSI-RS initial resource configuration 210-2B. Further, the same operations are performed for the antenna ports 31, 32, 35 and 36, the antenna ports 21, 22, 25 and 26, and the antenna ports 33, 34, 37 and 38.

In CSI-RS transmission method according to the above-described embodiment of the present invention, the CSI-RS initial resource configurations are aggregated, and the CSI-RSs are transmitted at different densities in the aggregated resource configuration, which enables the wireless communication system accomplish a good compatibility between FD-MIMO and massive MIMO system and the conventional MIMO system while the downlink control signaling overhead occupied by CSI-RSs can be reduced by decreasing the transmission densities.

Further, according to another example of the present invention, in the case where the resource aggregation is performed according to the type of mobile stations actually connected to the base station, the method illustrated in FIG. 1 may further include transmitting aggregation configuration information about the CSI-RS aggregation resource configuration to the mobile station by radio resource control (RRC) signaling. At least a portion of the aggregation configuration information can be informed using parameters already present in the communication system. For example, information about the CSI-RS initial resource configurations may be transmitted to the mobile station through an antenna ports counting parameter (antennaPortsCount).

Hereinafter, the method for detecting Channel State Information Reference Signals (CSI-RSs) performed by the mobile station according to an embodiment of the present invention will be described with reference to FIG. 7. FIG. 7 shows a flow chart of the CSI detection method 700. The CSI detection method 700 corresponds to the CSI-RS transmission method 100 shown in FIG. 1.

As shown in FIG. 7, in step S701, the aggregate configuration information about the CSI-RS aggregation resource configuration is received from a base station, where the CSI-RS aggregation resource configuration is obtained by aggregating a plurality of CSI-RS initial resource configurations. According to an example of the present invention, the CSI-RS aggregation resource configuration includes a first part of resource configuration and a second part of resource configuration. The base station may use the first part of resource configuration in the CSI-RS aggregation resource configuration to transmit CSI-RSs of the first antenna port in an antenna array at a first density, and use a second part of resource configuration in the CSI-RS aggregation resource configuration to transmit CSI-RSs of the second antenna port in the antenna array at a second density. The aggregation configuration information may include resource configuration information about the aggregated CSI-RS initial resource configurations, the total number of the aggregated CSI-RS initial resource configurations, the number of the CSI-RS initial resource configurations included in the first part of resource configuration of the CSI aggregation resource configuration, and a relationship parameter between the first density and the second density.

In step S702, antenna ports in the antenna array of the base station needing to be detected is determined according to the received aggregation configuration information. According to an example of the present invention, initial antenna ports corresponding to the CSI-RS initial resource configurations may be determined according to resource configuration information about the CSI-RS initial resource configurations. Then, antenna ports in the antenna array needing to be detected is obtained according to the determined initial antenna ports, the total number of the aggregated CSI-RS initial resource configurations, the number of the CSI-RS initial resource configurations included in the first part of resource configuration of the CSI-RS aggregation resource configuration, and the relationship parameter between the first density and the second density. For example, the antenna ports in the antenna array of the base station needing to be detected can be obtained using the above equations (1) - (4). Then, in step S703, CSI-RSs corresponding to the determined antenna ports are detected.

In the CSI detection method according to the above-described embodiment of the present invention, the mobile station using less antenna ports (e.g. 4 ports or 8 ports) for data reception can efficiently use the existing resource configurations to receive CSI-RSs without changing the receiving policy. On the other hand, the mobile station using more antenna ports (e.g. 24 ports, 28 ports, or 32 ports) for data reception can efficiently use a part of density resource configuration to receive CSI-RSs, which enables the wireless communication system accomplish a good compatibility between FD-MIMO and massive MIMO system and the conventional MIMO system while the downlink control signaling overhead occupied by CSI-RSs can be reduced by decreasing the transmission densities.

Next, the base station according to an embodiment of the present invention will be described with reference to FIG. 8. FIG. 8 shows a block diagram of the base station 800 in accordance with an embodiment of the present invention. As shown in FIG. 8, the base station 800 includes a resource management unit 810 and a transmitting unit 820. The base station 800 may further comprise other components than the two units. However, since these components are not related to content of the embodiments of the present invention, the drawing and description thereof are omitted herein. In addition, since specific details of operations performed by the base station 800 according to the embodiment of the present invention are the same as those described above with reference to FIGS. 1-6, repeated descriptions of the same details are omitted herein to avoid redundancy.

The resource management unit 810 aggregates a plurality of CSI-RS initial resource configurations to obtain a CSI-RS aggregation resource configuration. According to an example of the present invention, the CSI-RS initial resource configurations and the mode for aggregating the CSI-RS initial resource configurations may be determined according to the type of mobile stations actually connected to the base station. Specifically, there may be a first type of mobile stations and a second type of mobile stations connected to the base station 800, where the transmitting unit 820 transmits data to the first type of mobile stations through a first number of antenna ports in the antenna array and transmits data to the second type of mobile stations through a second number of antenna ports in the antenna array, the first number being less than the second number. The aggregated CSI-RS initial resource configurations may be determined according to the first type of mobile stations and the second type of mobile stations. For example, the pattern of the aggregated CSI-RS initial resource configurations may be determined according to the first type of mobile stations, and the number of the aggregated CSI-RS initial resource configurations is determined according to the pattern of the aggregated CSI-RS initial resource configurations and the second type of mobile stations. The pattern of the CSI-RS initial resource configurations may include the number of ports and the location of the occupied resources for transmitting CSI-RSs.

According to another example of the present invention, the CSI-RS initial resource configurations and the mode for aggregating the CSI-RS initial resource configurations may be determined according to the type of mobile stations possibly connected to the base station 800. Specifically, there may be a first type of mobile stations and a second type of mobile stations possibly connected to the base station 800, where the transmitting unit 820 transmits data to the first type of mobile stations through a first number of antenna ports in the antenna array and transmits data to the second type of mobile stations through a second number of antenna ports in the antenna array, the first number being less than the second number, as described above. The aggregated CSI-RS initial resource configurations may be determined according to the first type of mobile stations and the second type of mobile stations.

Moreover, according to another example of the present invention, the first type of mobile stations of may include one or more sub-types of mobile stations, where the number of antenna ports used by the transmitting unit 820 to transmit data to respective sub-types of mobile stations is different. In this case, the resource management unit 810 may determine the type of the aggregated CSI-RS initial resource configurations based on one or more sub-types of mobile stations. For example, the type of the aggregated CSI-RS initial resource configurations is a pattern of CSI-RS resource configurations for a specific sub-type of mobile stations of one or more sub-types of mobile stations.

For example, there may be mobile stations capable of receiving 4-port, 8-port and 24-port data transmissions connected to the base station. The resource management unit 810 can use mobile stations capable of receiving 4-port and 8-port data transmissions as the first type of mobile stations, and use mobile stations capable of receiving 24-port data transmission as the second type of mobile stations. The pattern of the aggregated CSI-RS initial resource configurations may be determined by the resource management unit 810 according to the number of mobile stations capable of receiving 4-port and 8-port data transmissions connected to the base station. For example, when the number of mobile stations capable of receiving 8-port data transmission connected to the base station is larger than the number of mobile stations capable of receiving 4-port data transmission connected to the base station, the pattern of the CSI-RS resource configuration for mobile stations capable of receiving 8-port data transmission is used as the pattern of the CSI-RS initial resource configurations by the resource management unit 810. On the contrary, the pattern of the CSI-RS resource configuration for mobile stations capable of receiving 4-port data transmission is used as the pattern of the CSI-RS initial resource configurations by the resource management unit 810.

CSI-RSs of a first antenna port in the antenna array are transmitted at a first density using a first part of resource configuration of the CSI-RS aggregation resource configuration by the transmitting unit 820. Moreover, CSI-RSs of a second antenna port in the antenna array are transmitted at a second density using a second part of resource configuration of the CSI-RS aggregation resource configuration by the transmitting unit 820. For example, the first density can be an integer time(s) of the second density.

As described above, there may be the first type of mobile stations and the second type of mobile stations connected to the base station 800, where the transmitting unit 820 transmits data to the first type of mobile stations through the first number of antenna ports in the antenna array and transmits data to the second type of mobile stations through the second number of antenna ports in the antenna array, the first number being less than the second number. According to an example of the present invention, the first part of resource configuration may be determined according to the first type of mobile stations and the second type of mobile stations by the resource management unit 810, where CSI-RSs of the first antenna port is used for CSI measurement of the first type of mobile stations, and CSI-RSs of the first antenna port and CSI-RSs of the second antenna port are used for CSI measurement of the second type of mobile stations. Thus, in the first part of resource configuration, CSI-RSs can be transmitted with a transmission density suitable for the first type of mobile stations. On the other hand, in the second part of resource configuration, since it is not necessary to consider the first type of mobile stations, CSI-RSs can be transmitted at the second density different from the first density. For example, CSI-RSs can be transmitted at the second density that is lower than the first density. Moreover, according to another example of the present invention, the first part of resource configuration can include at least one aggregated CSI-RS initial resource configuration.

According to an example of the present invention, the base station 800 may further comprise a port determining unit to determine an initial antenna port P' corresponding to the CSI-RS initial resource configurations according to resource configuration information about the CSI-RS initial resource configurations, and to obtain the antenna port P in the antenna array to be detected according to the determined initial antenna port, the number K of the CSI-RS initial resource configurations aggregated in the CSI aggregation resource configuration, the number L of the CSI-RS initial resource configurations in the first part of resource configuration of the CSI aggregation resource configuration, and a relationship parameter Q between the first density and the second density. As described above, in the first part of resource configuration, the antenna port P can be determined by the above equation (1) and equation (2); further, in the second part of resource configuration, the antenna port P can be determined by the above equation (3) and equation (4).

Moreover, according to another example of the present invention, the base station 800 may further comprise a coding unit to apply orthogonal covering code on CSI-RSs of the antenna ports transmitted in the second part of resource configuration in time and frequency to implement code division multiplexing, thereby improving the power gain when channels are estimated. For example, orthogonal covering code may be applied on a plurality of CSI-RS initial resource configurations included in the second part of resource configuration.

In the base station according to the above-described embodiment of the present invention, the CSI-RS initial resource configurations are aggregated, and the CSI-RSs are transmitted at different densities in the aggregated resource configuration, which enables the wireless communication system accomplish a good compatibility between FD-MIMO and massive MIMO system and the conventional MIMO system while the downlink control signaling overhead occupied by CSI-RSs can be reduced by decreasing the transmission densities.

Further, according to another example of the present invention, in the case where the resource aggregation is performed according to the type of mobile stations actually connected to the base station, the transmitting unit 820 may further transmit aggregation configuration information about the CSI-RS aggregation resource configuration to the mobile station by radio resource control (RRC) signaling. At least a portion of the aggregation configuration information can be informed using parameters already present in the communication system. For example, information about the CSI-RS initial resource configurations may be transmitted to the mobile station through an antenna ports counting parameter.

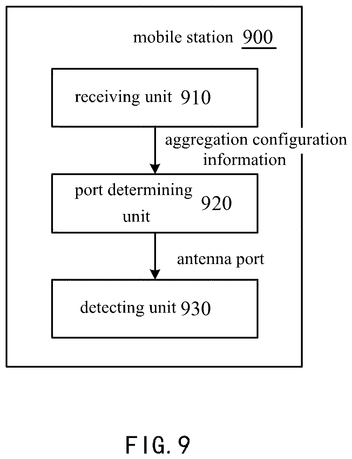

According to an embodiment of the present invention, the mobile station can be correspondingly set according to the base station. FIG. 9 shows a block diagram of a mobile station 900 in accordance with an embodiment of the present invention. As shown in FIG. 9, the mobile station 900 includes a receiving unit 910, a port determining unit 920 and a detecting unit 930. The mobile station 900 may further comprise other components than the three units. However, since these components are not related to content of the embodiments of the present invention, the drawing and description thereof are omitted herein. In addition, since specific details of operations performed by the mobile station 900 according to the embodiment of the present invention are the same as those described above with reference to FIG. 7, repeated descriptions of the same details are omitted herein to avoid redundancy.

The receiving unit 910 may receive the aggregate configuration information about the CSI-RS aggregation resource configuration from a base station, where the CSI-RS aggregation resource configuration is obtained by aggregating a plurality of CSI-RS initial resource configurations. According to an example of the present invention, the CSI-RS aggregation resource configuration includes a first part of resource configuration and a second part of resource configuration. The base station may use the first part of resource configuration in the CSI-RS aggregation resource configuration to transmit CSI-RSs of the first antenna port in an antenna array at a first density, and use a second part of resource configuration in the CSI-RS aggregation resource configuration to transmit CSI-RSs of the second antenna port in the antenna array at a second density. The aggregation configuration information may include resource configuration information about the aggregated CSI-RS initial resource configurations, the total number of the aggregated CSI-RS initial resource configurations, the number of the CSI-RS initial resource configurations included in the first part of resource configuration of the CSI aggregation resource configuration, and a relationship parameter between the first density and the second density.

Antenna ports in the antenna array of the base station needing to be detected is determined according to the received aggregation configuration information by the port determining unit 920. According to an example of the present invention, initial antenna ports corresponding to the CSI-RS initial resource configurations may be determined according to resource configuration information about the CSI-RS initial resource configurations. Then, antenna ports in the antenna array needing to be detected is obtained according to the determined initial antenna ports, the total number of the aggregated CSI-RS initial resource configurations, the number of the CSI-RS initial resource configurations included in the first part of resource configuration of the CSI-RS aggregation resource configuration, and relationship parameter between the first density and the second density. For example, the antenna ports in the antenna array of the base station needing to be detected can be obtained using the above equations (1) - (4). Then, CSI-RSs corresponding to the determined antenna ports are detected by the detecting unit 930.

In the CSI detection method according to the above-described embodiment of the present invention, the mobile station using less antenna ports (e.g. 4 ports or 8 ports) for data reception can efficiently use the existing resource configurations to receive CSI-RSs without changing the receiving policy. On the other hand, the mobile station using more antenna ports (e.g. 24 ports, 28 ports, or 32 ports) for data reception can efficiently use a part of density resource configuration to receive CSI-RSs, which enables the wireless communication system accomplish a good compatibility between FD-MIMO and massive MIMO system and the conventional MIMO system while the downlink control signaling overhead occupied by CSI-RSs can be reduced by decreasing the transmission densities.

The operations of the base station 800 and the mobile station 900 described above may be implemented by hardware or by software modules executed by a processor, and may be further implemented by a combination of hardware and software modules.

The software modules may be arranged in a storage medium in any format, such as a RAM (Random Access Memory), a flash memory, a ROM (Read Only Memory), an EPROM (Erasable Programmable ROM), an EEPROM (Electrically Erasable Programmable ROM), a register, a hard disk, a removable disk, and a CD-ROM.

Such storage medium is connected to the processor so that the processor can write information into the storage medium or read information from the storage medium. Such storage medium can also be accumulated in the processor. Such storage medium and processor may be arranged in an ASIC. Such ASIC may be arranged in the base station 800 and the mobile station 900. As discrete components, such storage medium and processor may be arranged in the base station 800 and the mobile station 900. For example, the operations performed by the resource management unit in the base station can be executed by a processor. For example, the operations performed by the port determining unit and the detecting unit in the mobile station described above may be executed by a processor.

Therefore, the present invention has been explained in detail by using the above embodiments; however, it is apparent for those skilled in the art that the present invention is not limited to the embodiments explained herein. The invention may be implemented in a corrected, modified mode without departing from the scope of the invention defined by the claims. Therefore, the description of the specification is only intended to explain the examples, and does not impose any limit on the present invention.

**Claims**

1. A method for transmitting Channel State Information Reference Signals (CSI-RSs) performed by a base station, wherein the base station an antenna array, the method comprising:

   aggregating a plurality of CSI-RS initial resource configurations to obtain a CSI-RS aggregation resource configuration;
   transmitting CSI-RSs of a first antenna port in the antenna array at a first density, using a first resource configuration of the CSI-RS aggregation resource configuration; and
   transmitting CSI-RSs of a second antenna port in the antenna array at a second density, using a second resource configuration of the CSI-RS aggregation resource configuration.

2. The method of claim 1, wherein
   a first type of mobile stations and a second type of mobile stations are connected to the base station,
   the base station transmits data to the first type of mobile stations through a first number of antenna ports in the antenna array,
   the base station transmits data to the second type of mobile stations through a second number of antenna ports in the antenna array,
   the first number is less than the second number, and
   the method further comprises:
   determining the aggregated CSI-RS initial resource configurations according to the first type of mobile stations and the second type of mobile stations.

3. The method of claim 2, wherein determining the aggregated CSI-RS initial resource configurations according to the first type of mobile stations and the second type of mobile stations comprises:

   determining a pattern of the aggregated CSI-RS initial resource configurations according to the first type of mobile stations;
   determining the number of the aggregated CSI-RS initial resource configurations according to the pattern of the aggregated CSI-RS initial resource configurations and the second type of mobile stations.

4. The method of claim 3, wherein
   the first type of mobile stations includes one or more sub-types of mobile stations,
   the number of antenna ports used by the base station to transmit data to respective sub-types of mobile stations is different,
   the determining a pattern of the aggregated CSI-RS initial resource configurations according to the first type of mobile stations comprises:

   determining a pattern of the aggregated CSI-RS initial resource configurations according to the one or more sub-types of mobile stations.

5. The method of claim 4, wherein
   the pattern of the aggregated CSI-RS initial resource configurations is a pattern of CSI-RS resource configurations for a specific sub-type of mobile stations of the one or more sub-types of mobile stations.

6. The method of any of claims 2 to 5, further comprising:

   determining the first resource configuration according to the first type of mobile stations and the second type of mobile stations, wherein
   CSI-RSs of the first antenna port is used for CSI measurement of the first type of mobile stations,
   CSI-RSs of the first antenna port and CSI-RSs of the second antenna port are used for CSI measurement of the second type of mobile stations.

7. The method of claim 6, wherein
   the first resource configuration includes at least one aggregated CSI-RS initial resource configuration.

8. The method of any of claims 2 to 5, wherein
the first density is an the second density, and
a relationship between the first density and the second density is determined according to the first type of mobile stations and the second type of mobile stations.

9. The method of any of claims 1 to 5, wherein
aggregation configuration information about the CSI-RS aggregation resource configuration is transmitted to a mobile station by radio resource control (RRC) signaling.

10. The method of any of claims 1 to 5, wherein
information about the CSI-RS initial resource configurations is transmitted to a mobile station through an antenna ports counting parameter.

11. A method for detecting Channel State Information Reference Signals (CSI-RSs) performed by a mobile station, comprising:

receiving aggregate configuration information about a CSI-RS aggregation resource configuration from a base station, wherein the CSI-RS aggregation resource configuration is obtained by aggregating a plurality of CSI-RS initial resource configurations;
determining antenna ports in an antenna array of the base station needing to be detected according to the received aggregation configuration information;
detecting CSI-RSs corresponding to the determined antenna ports.

12. The method of claim 11, wherein
the CSI-RS aggregation resource configuration includes a first part of resource configuration and a second part of resource configuration,
the base station uses the first part of resource configuration in the CSI-RS aggregation resource configuration to transmit CSI-RSs of a first antenna port in the antenna array at a first density, and uses a second part of resource configuration in the CSI-RS aggregation resource configuration to transmit CSI-RSs of a second antenna port in the antenna array at a second density,
the aggregation configuration information includes resource configuration information about the aggregated CSI-RS initial resource configurations, the number of the aggregated CSI-RS initial resource configurations, the first part of resource configuration of the CSI aggregation resource configuration, and a relationship parameter between the first density and the second density.

13. The method of claim 12, wherein determining antenna ports in an antenna array of the base station needing to be detected according to the received aggregation configuration information comprises:

determining initial antenna ports corresponding to the CSI-RS initial resource configurations according to resource configuration information about the CSI-RS initial resource configurations;
obtaining antenna ports in the antenna array needing to be detected according to the determined initial antenna ports, the number of the aggregated CSI-RS initial resource configurations, the first part of resource configuration of the CSI-RS aggregation resource configuration, and the relationship parameter between the first density and the second density.

14. The method of claim 13, wherein determining antenna ports in an antenna array of the base station needing to be detected according to the received aggregation configuration information further comprises:
determining the antenna ports in the antenna array needing to be detected according to a resource block index indicated in the aggregated CSI-RS initial resource configurations.

15. Abase station comprising:

a resource management unit configured to aggregate a plurality of CSI-RS initial resource configurations to obtain a CSI-RS aggregation resource configuration;
a transmitting unit configured to transmit CSI-RSs of a first antenna port in the antenna array at a first density using a first part of resource configuration of the CSI-RS aggregation resource configuration, and transmit CSI-RSs of a second antenna port in the antenna array at a second density using a second part of resource configuration of the CSI-RS aggregation resource configuration.

**16.** The base station of claim 15, wherein
a first type of mobile stations and a second type of mobile stations are connected to the base station,
the transmitting unit is further configured to transmit data to the first type of mobile stations through a first number of antenna ports in the antenna array, and transmit data to the second type of mobile stations through a second number of antenna ports in the antenna array, wherein the first number is less than the second number, and
the resource management unit determines the aggregated CSI-RS initial resource configurations according to the first type of mobile stations and the second type of mobile stations.

**17.** The base station of claim 16, wherein
the resource management unit determines a pattern of the aggregated CSI-RS initial resource configurations according to the first type of mobile stations, and determines the number of the aggregated CSI-RS initial resource configurations according to the pattern of the aggregated CSI-RS initial resource configurations and the second type of mobile stations.

**18.** The base station of claims 16 or 17, wherein
the resource management unit determines the first part of resource configuration according to the first type of mobile stations and the second type of mobile stations,
CSI-RSs of the first antenna port is used for CSI measurement of the first type of mobile stations,
CSI-RSs of the first antenna port and CSI-RSs of the second antenna port are used for CSI measurement of the second type of mobile stations.

**19.** The base station of claims 16 or 17, wherein
the first density is an integer time(s) of the second density, and
a relationship between the first density and the second density is determined according to the first type of mobile stations and the second type of mobile stations.

**20.** A mobile station comprising:

a receiving unit configured to receive aggregate configuration information about a CSI-RS aggregation resource configuration from a base station, wherein the CSI-RS aggregation resource configuration is obtained by aggregating a plurality of CSI-RS initial resource configurations;
a port determining unit configured to determine antenna ports in an antenna array of the base station needing to be detected according to the received aggregation configuration information;
a detecting unit configured to detect CSI-RSs corresponding to the determined antenna ports.

**21.** The mobile station of claim 20, wherein
the CSI-RS aggregation resource configuration includes a first resource configuration and a second part of resource configuration,
the base station uses the first part of resource configuration in the CSI-RS aggregation resource configuration to transmit CSI-RSs of a first antenna port in the antenna array at a first density, and uses a second part of resource configuration in the CSI-RS aggregation resource configuration to transmit CSI-RSs of a second antenna port in the antenna array at a second density,
the configuration information includes resource configuration information about the aggregated CSI-RS initial resource configurations, the number of the aggregated CSI-RS initial resource configurations, the first part of resource configuration of the CSI aggregation resource configuration, and a relationship parameter between the first density and the second density.

**22.** The mobile station of claim 21, wherein
the port determining unit determines initial antenna ports corresponding to the CSI-RS initial resource configurations according to resource configuration information about the CSI-RS initial resource configurations, and obtains antenna ports in the antenna array needing to be detected according to the determined initial antenna ports, the number of the aggregated CSI-RS initial resource configurations, the first part of resource configuration of the CSI-RS aggregation resource configuration, and the relationship parameter between the first density and the second density.

**23.** The mobile station of claim 22, wherein
the port determining unit further determines the antenna ports in the antenna array needing to be detected according to a resource block index indicated in the aggregated CSI-RS initial resource configurations.

100

| aggregating a plurality of CSI-RS initial resource configurations to obtain a CSI-RS aggregation resource configuration | ∼ S101 |

| transmitting CSI-RSs of a first antenna port at a first density using a first partial resource configuration | ∼ S102 |

| transmitting CSI-RSs of a second antenna port at a second density using a second partial resource configuration | ∼ S103 |

FIG. 1

FIG. 2

FIG. 3

FIG. 4

FIG. 5

FIG. 6

700

```
┌─────────────────────────────────────────────┐
│  receiving aggregate configuration           │
│  information about a CSI-RS aggregation       │──── S701
│  resource configuration from a base station,  │
│  wherein the CSI-RS aggregation resource      │
│  configuration is obtained by aggregating a   │
│  plurality of CSI-RS initial resource         │
│  configurations                               │
└─────────────────────────────────────────────┘
                      │
                      ▼
┌─────────────────────────────────────────────┐
│  determining antenna ports in an antenna      │
│  array of the base station needing to be      │──── S702
│  detected according to the received           │
│  aggregation configuration information        │
└─────────────────────────────────────────────┘
                      │
                      ▼
┌─────────────────────────────────────────────┐
│  detecting CSI-RSs corresponding to the       │──── S703
│  determined antenna ports                     │
└─────────────────────────────────────────────┘
```

FIG. 7

```
┌─────────────────────────────────────────────┐
│          base station   800                   │
│   ┌──────────────────────────┐                │
│   │  resource                 │                │
│   │  management unit  810     │                │
│   └──────────────────────────┘                │
│                │                               │
│                │   CSI-RS aggregation resource configuration
│                ▼                               │
│   ┌──────────────────────────┐                │
│   │  transmitting unit 820    │                │
│   └──────────────────────────┘                │
└─────────────────────────────────────────────┘
```

FIG. 8

FIG. 9

## INTERNATIONAL SEARCH REPORT

| International application No. |
|---|
| **PCT/CN2017/083439** |

### A. CLASSIFICATION OF SUBJECT MATTER

H04W 4/00(2009.01) i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, WPI, EPODOC, GOOGLE, 3GPP: channel state reference signal, shorten, compatible, full dimensional multiple input multiple output, massivemultiple input multiple output, CSI-RS, density, period, frequency, reduction, reduce, antenna, ports, resource, RE, aggregat+, FD-MIMO, Massive MIMO

### C. DOCUMENTS CONSIDERED TO BE RELEVANT

| Category* | Citation of document, with indication, where appropriate, of the relevant passages | Relevant to claim No. |
|---|---|---|
| X | CN 102754458 A (RESEARCH IN MOTION LIMITED), 24 October 2012 (24.10.2012), description, paragraphs [0137]-[0146] and[0154], and claims 1-10 | 1-23 |
| A | CN 105075319 A (PANASONIC INTELLECTUAL PROPERTY CORPORATION OF AMERICA), 18 November 2015 (18.11.2015), the whole document | 1-23 |
| A | CN 103843274 A (HUAWEI TECHNOLOGIES CO., LTD.), 04 June 2014 (04.06.2014), the whole document | 1-23 |
| A | US 2015180628 A1 (LG ELECTRONICS INC.), 25 June 2015 (25.06.2015), the whole document | 1-23 |
| A | CATT. "Discussion on CSI-RS Overhead Reduction", 3GPP TSG RAN WG1 MEETING #84 BIS, R1-162280., 15 April 2016 (15.04.2016), the whole document | 1-23 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 16June 2017 (16.06.2017) | **28June 2017 (28.06.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**CHEN, Jing**<br><br>Telephone No.:(86-10) **53318976** |

Form PCT/ISA/210 (second sheet) (July 2009)

## INTERNATIONAL SEARCH REPORT
### Information on patent family members

| International application No. |
| --- |
| **PCT/CN2017/083439** |

| Patent Documents referred in the Report | Publication Date | Patent Family | Publication Date |
| --- | --- | --- | --- |
| CN 102754458 A | 24 October 2012 | CA 2789439 A1 | 18 August 2011 |
| | | EP 2534857 A1 | 19 December 2012 |
| | | US 2013039203 A1 | 14 February 2013 |
| | | WO 2011100672 A1 | 18 August 2011 |
| | | US 2016174235 A1 | 16 June 2016 |
| CN 105075319 A | 18 November 2015 | US 2016050153 A1 | 18 February 2016 |
| | | WO 2014166052 A1 | 16 October 2014 |
| | | JP 2016516371 A | 02 June 2016 |
| CN 103843274 A | 04 June 2014 | EP 2899909 A1 | 29 July 2015 |
| | | US 2015201346 A1 | 16 July 2015 |
| | | WO 2014047797 A1 | 03 April 2014 |
| US 2015180628 A1 | 25 June 2015 | CN 104541460 A | 22 April 2015 |
| | | JP 2015523814 A | 13 August 2015 |
| | | WO 2014010994 A1 | 16 January 2014 |
| | | KR 20150054718 A | 20 May 2015 |

Form PCT/ISA/210 (patent family annex) (July 2009)